## Europäisches Patentamt
## European Patent Office
## Office européen des brevets

(19)

(11) Veröffentlichungsnummer: **0 001 646**
**B1**

(12) **EUROPÄISCHE PATENTSCHRIFT**

(45) Veröffentlichungstag der Patentschrift: **23.06.82**

(51) Int. Cl.³: **B 62 K 21/12**

(21) Anmeldenummer: **78101229.9**

(22) Anmeldetag: **25.10.78**

(54) Lenkeinrichtung für Fahrräder.

(30) Priorität: 26.10.77 DE 2748027
07.12.77 DE 2754531

(43) Veröffentlichungstag der Anmeldung:
**02.05.79 Patentblatt 79/9**

(45) Bekanntmachung des Hinweises auf die Patenterteilung:
**23.06.82 Patentblatt 82/25**

(84) Benannte Vertragsstaaten:
**BE CH FR GB LU NL SE**

(56) Entgegenhaltungen:
**DE - A - 2 303 343**
**FR - A - 1 047 414**
**FR - A - 2 308 542**
**US - A - 3 656 368**
**US - A - 3 848 480**
**US - A - 3 964 339**

(73) Patentinhaber: **Hofmann-Igl, Ernest**
**Igl Art Hus**
**D-2285 Kampen / Sylt (DE)**

(72) Erfinder: **Hofmann-Igl, Ernest**
**Igl Art Hus**
**D-2285 Kampen / Sylt (DE)**

(74) Vertreter: **Tiedtke, Harro, Dipl.-Ing. et al,**
**Patentanwälte Tiedtke-Bühling- Kinne-Grupe-**
**Pellmann Bavariaring 4**
**D-8000 München 2 (DE)**

Courier Press, Leamington Spa, England.

Lenkeinrichtung für Fahrräder

Die Erfindung bezieht sich auf eine Lenkeinrichtung für Fahrräder gemäß dem Oberbegriff des Patentanspruchs 1.

Bei einer bekannten Lenkeinrichtung dieser Art (FR—PS 1 047 414) ist die den Lenker umhüllende Kunststoffschicht als dünne, schlauchartige Schutzschicht ausgebildet. Sie wird entweder direkt auf das noch nicht gebogene Lenkstangenrohr aufgebracht, indem dieses eine Strangpresse durchläuft, oder es wird ein erweichter Plastikschlauch aufgeweitet und auf die Lenkstange aufgezogen, der dann anschließend schrumpft und aushärtet und sich dabei innig an das Lenkstangenrohr anschmiegt. Die Kunststoffschicht dient somit nur dazu, den Lanker gegen durch Witterungseinflüsse, Stöße oder dgl. auftretende Rostschäden zu schützen. Eine Aufnahme der Fahrbahnstöße oder der bei einem Unfall auftretenden Aufprallkräfte ist durch die Kunststoffschicht nicht möglich. Diese Kräfte wirken vielmehr praktisch ungedämpft auf den Fahrer.

Der Erfindung liegt demgegenüber die Aufgabe zugrunde, eine Lenkeinrichtung gemäß dem Oberbegriff des Patentanspruchs 1 zu schaffen, die ein relativ ermüdungsfreies Fahren ermöglicht und bei der das Verletzungsrisiko gering ist.

Diese Aufgabe wird durch die im kennzeichnenden Teil des Anspruchs 1 angegebenen Merkmale gelöst.

Die erfindungsgemäß vorgesehene Kunststoffumschäumung von Zwischenstück und Lenker bildet eine Rundumpolsterung, die dem Lenker in erster Linie seine bisherige Gefährlichkeit nimmt. Unfallbedingte Aufprallkräfte werden durch die Kunststoffumschäumung erheblich gedämpft und damit die Verletzungsgefahr verringert. Außerdem werden die beim Fahren auftretenden Fahrbahnstöße in jeder Handstellung des Fahrers weitgehend durch die Kunststoffumschäumung der gesamten Lenkeinrichtung absorbiert und nicht mehr auf das Handgelenk des Fahrers übertragen, wodurch eine vorzeitige Ermüdung des Fahrers vermieden wird. Durch die vollständige Kunststoffumschaumung wird der Lenker überdies griffiger sowie wärme- und kälteisolierend. Die Kunststoffumschäumung ermöglicht es außerdem, das Außenprofil des Lenkers unabhängig vom Profil des Lenkstangenmaterials zu wählen, und insbesondere die Dicke der Polsterung an Stellen, die eine besonders hohe Verletzungsgefahr begründen, dicker zu wählen als an anderen Bereichen der Lenkeinrichtung. Schließlich bedeutet die erfindungsgemäß vorgesehene Ausbildung des Bremsgriffs als den Endteil des umschäumten Lenkers bildender Drehgriff eine Integration des Bremsgriffs in den Lenker, die die bei herkömmlichen Lenkeinrichtungen weit von dem Lenker abstehenden und damit außerordentlich gefährlichen Bremsgriffe vollständig verschwinden läßt, so daß die Schutzwirkung der Kunststoffumschäumung voll zum Tragen kommt und die Verletzungsgefahr tatsächlich auf das erreichbare Minimum reduziert ist.

Zweckmäßige Ausgestaltungen der Erfindung sind den Unteransprüchen entnehmbar.

Die Erfindung ist nachstehend anhand eines in den Zeichnungen dargestellten Ausführungsbeispiels näher erläutert. Es zeigt:

Fig. 1 eine perspektivische Darstellung der erfindungsgemäßen Lenkeinrichtung schräg von hinten und oben in der Sportlenkerstellung des Lenkers,

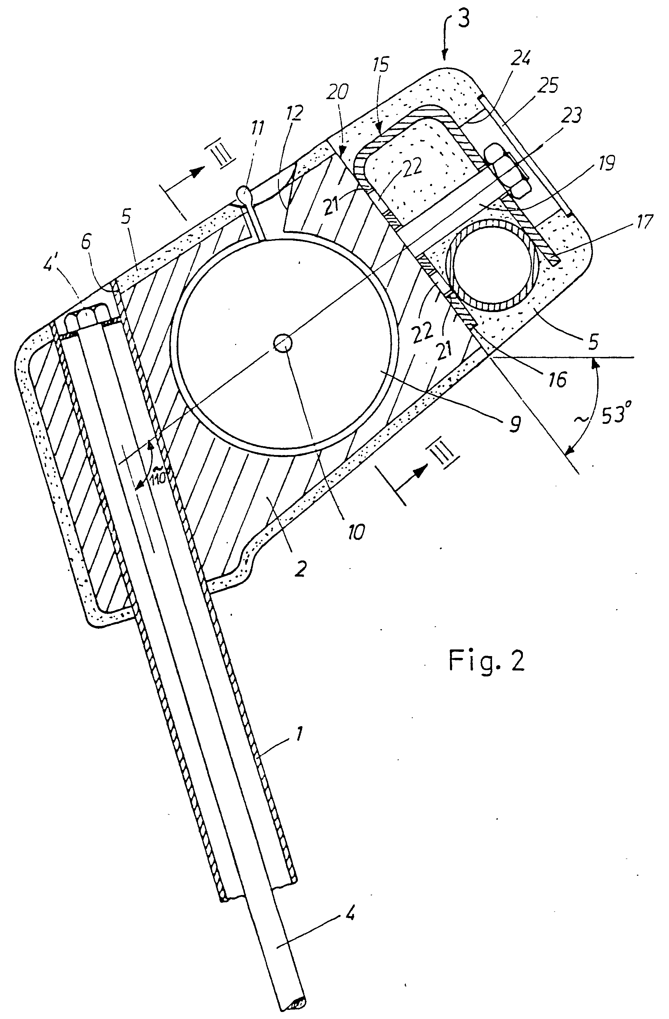

Fig. 2 den Längsmittelschnitt durch die Lenkeinrichtung gemäß Figure 1,

Fig. 3 den Schnitt nach der Linie III—III in Figur 2,

Fig. 4 eine perspektivische Teilansicht des Lenkers vor dem Umschäumen,

Fig. 5 eine perspektivische Darstellung der Lenkeinrichtung schräg von vorn in der Gesundheitslenkerstellung des Lenkers,

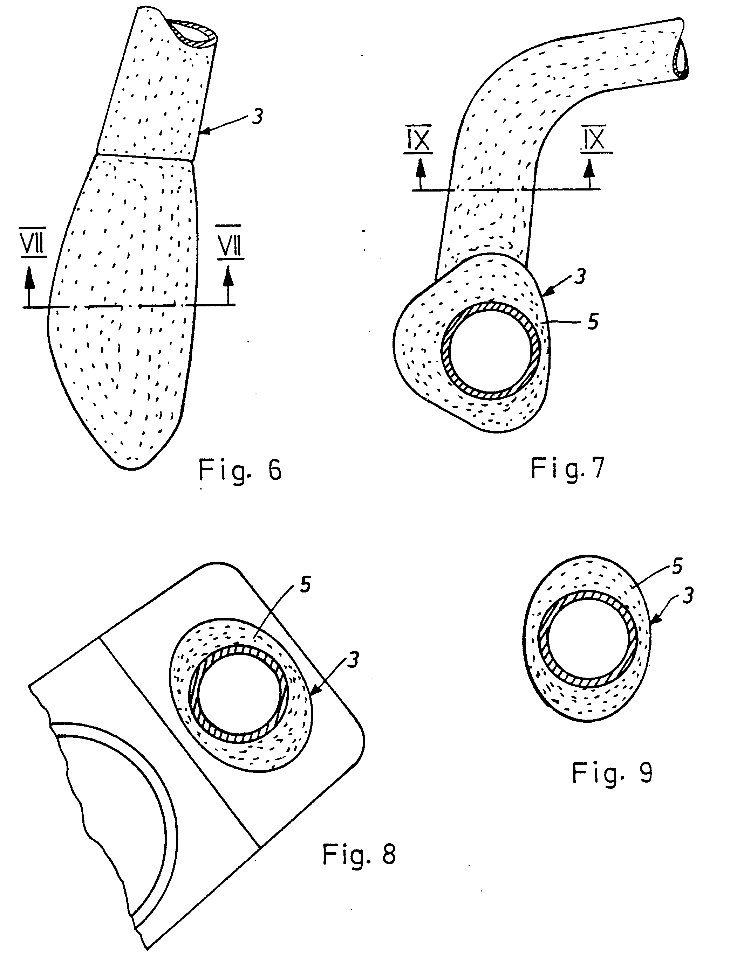

Fig. 6 den Grundriß eines Endteils,

Fig. 7 den Schnitt gemäß Linie VII—VII in Fig. 6,

Fig. 8 den Schnitt gemäß Linie VIII—VIII in Fig. 1,

Fig. 9 den Schnitt gemäß Linie IX—IX in Fig. 7,

Fig. 10 den Drehgriff in auseinandergezogener Darstellung,

Fig. 11 einen Schnitt des Drehgriffs in der Rastlage,

Fig. 12 einen Teilschnitt des Drehgriffs während eines Bremsvorgangs,

Fig. 13 die Einsetzschraube des Drehgriffs sowie Ausbildungen des Zugseilendstücks und

Fig. 14 einen Teilschnitt eines weiteren Ausführungsbeispiels des Drehgriffs.

Die erfindungsgemäße Lenkeinrichtung weist einen Lenkerschaft 1, ein Zwischenstück 2 sowie einen Lenker 3 auf. Der Lenkerschaft 1 verbindet die Lenkeinrichtung in bekannter Weise mit einem Gabelschaft, und zwar mittels einer mit einem Spreizkonus zusammenwirkenden Spannschraube 4. Der Lenkerschaft 1 ist mit dem Zwischenstück 2 fest verbunden. Dies geschieht, wenn das Zwischenstück 2 als Blechpreßteil ausgebildet ist, durch Einpressen. Wenn das Zwischenstück 2 dagegen als Spritzgußteil, beispielsweise als Aluminiumspritzgußteil, ausgebildet ist, so kann der Lenkerschaft 1 entweder einfach umspritzt oder einstückig mit dem Zwischenstück 2 hergestellt werden.

Der aus einem Rohr hergestellte Lenker 3 ist zusammen mit dem Zwischenstück 2 mit einer eine verdichtete Oberfläche aufweisenden Kunststoffumschäumung 5 versehen, die entweder aus Integralschaum beispielsweise Polyurethanschaum, der nach dem Schäumverfahren oder Spritzschäumverfahren aufgebracht wird, oder aus einer Gummi-Kunststoff-mischung besteht. Die Kunststoffumschäu-mung 5 ist beispielsweise schwarz und weist eine genarbte und porige Oberflächenstruktur auf. Ihre Dichte wird so gewählt, daß eine Elastizität des Schaums vorliegt, die hochfrequenzte Schwingungen optimal dämpft.

Im Bereich des Kopfs 4' der Spannschraube 4 weist die Kunststoffumschäumung 5 eine den Kopf 4' aufnehmende Ausnehmung 6 auf, die durch einen nicht dargestellten Klemmdeckel verschließbar ist.

An der rechten Seite des Zwischenstücks 2 ist eine seitliche Ausnehmung 8 angeordnet, in der eine Glocke 9 untergebracht ist, die auf einem Zapfen 10 sitzt, der einstückig mit dem Zwischenstück 2 ausgebildet ist. Die Betätigungseinrichtung 11 der Glocke 9 durchdringt eine Ausnehmung 12 im Zwischenstück 2, die von der seitlichen Ausnehmung 8 zur oberen Fläche des Zwischenstücks führt und nur ein kurzes Stück aus der in diesem Bereich eine Mulde bildenden Oberfläche der Kunststoffumschäumung 5 herausragt.

Der seitlichen Ausnehmung 8 für die Glocke 9 gegenüberliegend ist eine verschließbare Aufnahmeöffnung 13 im Zwischenstück 2 vorgesehen, der ein gewölbter Deckel 14 zugeordnet ist und der zur Unterbringung von Flickzeug, Ersatzventilen, einer Zeitmeßuhr o. dgl. dient. Am Rand der verschließbaren Aufnahmeöffnung 13 springt die Kunststoffumschäumung 5 geringfügig nach innen vor, so daß der gewölbte Deckel 14 klemmend in der verschließbaren Aufnahmeöffnung 13 gehalten wird.

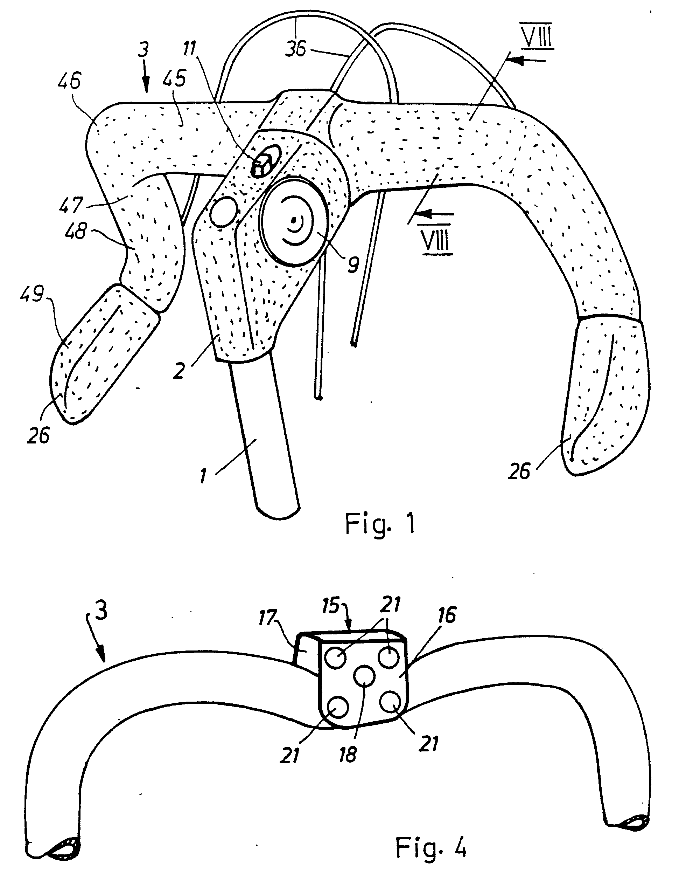

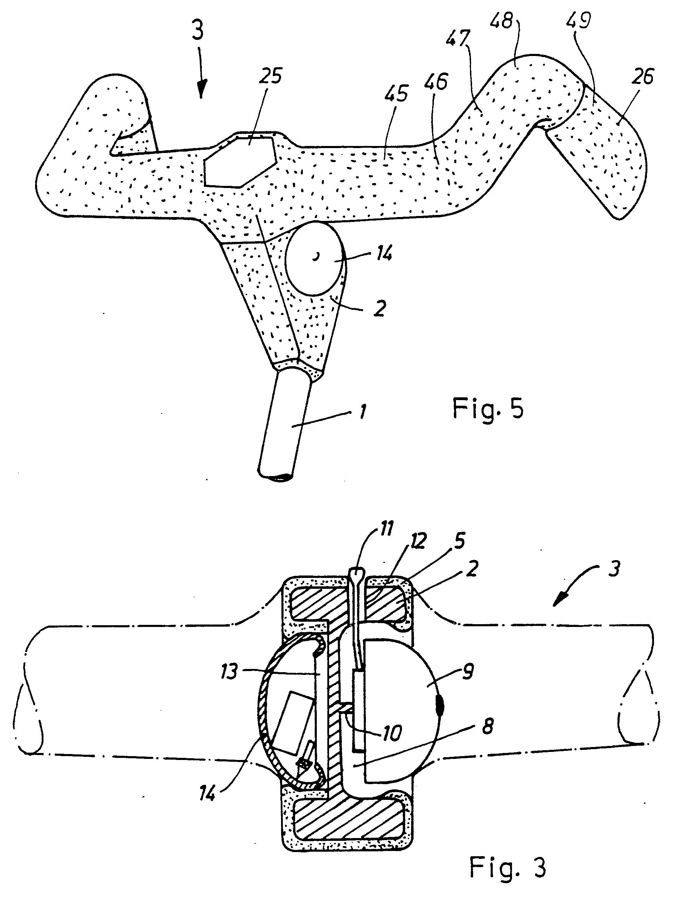

Das Zwischenstück 2 kann an seiner nach oben weisenden Fläche noch mit einer weiteren, zur Aufnahme eines Tachometers und/oder eines Kilometerzählers dienenden, bzw. an seiner nach vorn weisenden Fläche mit einer Ausnehmung zur Aufnahme einer Lampe versehen sein. Der Lenker 3 und das Zwischenstück 2 sind mittels eines mittig an dem Lenker 3 durch Punktschweißen festgelegten U-förmigen Bügels 15 miteinander verbunden, dessen Schenkel 16 und 17 mit einer zentralen Bohrung 18 versehen sind, die zur Aufnahme eines eine Drehachse für den Lenker 3 bildenden Befestigungsbolzens 19 dient, der im Zwischenstück 2 verankert ist. Neben der zentralen Bohrung 18 weist der Schenkel 16, der an der nicht ummantelten vorderen Stirnfläche 20 des Zwischenstücks 2 anliegt, vier kleinere Bohrungen 21 auf, die spiegelsymmetrisch zu einer horizontalen Achse durch die zentrale Bohrung 18 angeordnet sind und mit vier, aus der Stirnfläche 20 des Zwischenstücks 2 vorspringenden Zapfen 22 zusammenwirken. Durch die spiegelsymmetrische Anordnung der Bohrungen 21 und Zapfen 22 ist es möglich, den Lenker 3 in zwei zueinander im 180° verdrehten Stellungen auf dem Verbindungsstück zu montieren, nämlich entweder als Sportlenker (Fig. 1) oder als Gesundheitslenker (Fig. 5). Die die Mutter 23 des Befestigungsbolzens 19 aufnehmende Ausnehmung in der Kunststoffumschäumung 5 ist durch einen Klemmdeckel 25 verschlossen.

Selbstverständlich kann die formschlüssige Verbindung zwischen dem Lenker und dem Zwischenstück auch dadurch erzielt werden, daß für den Lenker anstelle eines Rohrquerschnitts ein mit einer der vorderen Stirnfläche des Zwischenstücks entsprechenden Seite versehenes Blechprofil vorgesehen wird, das aus miteinander verschweißten Blechprofilteilen besteht.

Das Zwischenstück 2 ragt vom Lenkerschaft 1 schräg nach vorn und oben und seine Mittelachse schließt mit der Achse des Lenkerschafts 1 einen stumpfen Winkel von etwa 110° ein. Die Stirnfläche 20 des Zwischenstücks 2 steht senkrecht zu dessen Mittelachse, so das dann, wenn man von einer Neigung des Lenkerschafts 1 gegenüber der Vertikalen von 17° ausgeht, die Stirnfläche 20 mit der Horizontalen eine nach vorne und unten offenen Winkel von etwa 53° einschließt.

Der Lenker 3 besteht aus zwei beidseits des Lenkerschaftes 1 liegenden Armen, von denen jeder einen etwa handbreiten geraden Innenabschnitt 45 und einen sich an diesen über einen einen kleinen Krümmungsradius aufweisenden ersten Bogen 46 von knapp 90° anschließenden, etwa in der durch die von der zweiten Spannschraube 19 gebildeten Drehachse festgelegten Drehebene liegenden Zwischenabschnitt 47 aufweist, der über einen ebenfalls einen kleineren Krümmungsradius aufweisenden zweiten Bogen 48 von knapp 90° mit dem ebenfalls etwa handbreiten, sich etwa in Richtung der Achse des Befestigungsbolzens 19 erstreckendes Endteil 49 des Lenkers 3 in Verbindung steht. Hierdurch ergibt sich für die Sportlenkerstellung des Lenkers 3 der in Fig. 1 dargestellte und für die Gesundheitslenkerstellung die in Fig. 5 dargestellte Form. Der Querschnitt der Kunststoffumschäumung 5 des geraden Innenabschnitts 45 jedes Arms des Lenkers 3 weist die Form einer Ellipse auf, deren lange Achse etwa parallel zur Drehebene des Lenkers 3 liegt.

Auch im Zwischenabschnitt 47 sowie dem ersten Bogen 46 und dem zweiten Bogen 48 weist die Kunststoffumschäumung etwa die Form einer Ellipse auf, wobei deren lange Achse etwa in der Ebene liegt, die von dem Zwischenabschnitt 47 und dem Endteil 49 bestimmt wird.

Der Endteil 49 jedes Armes des Lenkers 5 weist eine Kunststoffumschäumung 5 auf, die an ihrer dem Lankerschaft 1 abgewandten Seite balliger ausgebildet ist als an ihrer dem Lenkerschaft 1 zugewandten Seite. Mindestens einer der beiden Endteile 49 des Lenkers 3 ist als Drehgriff 26 zur Betätigung einer Bremse ausgebildet.

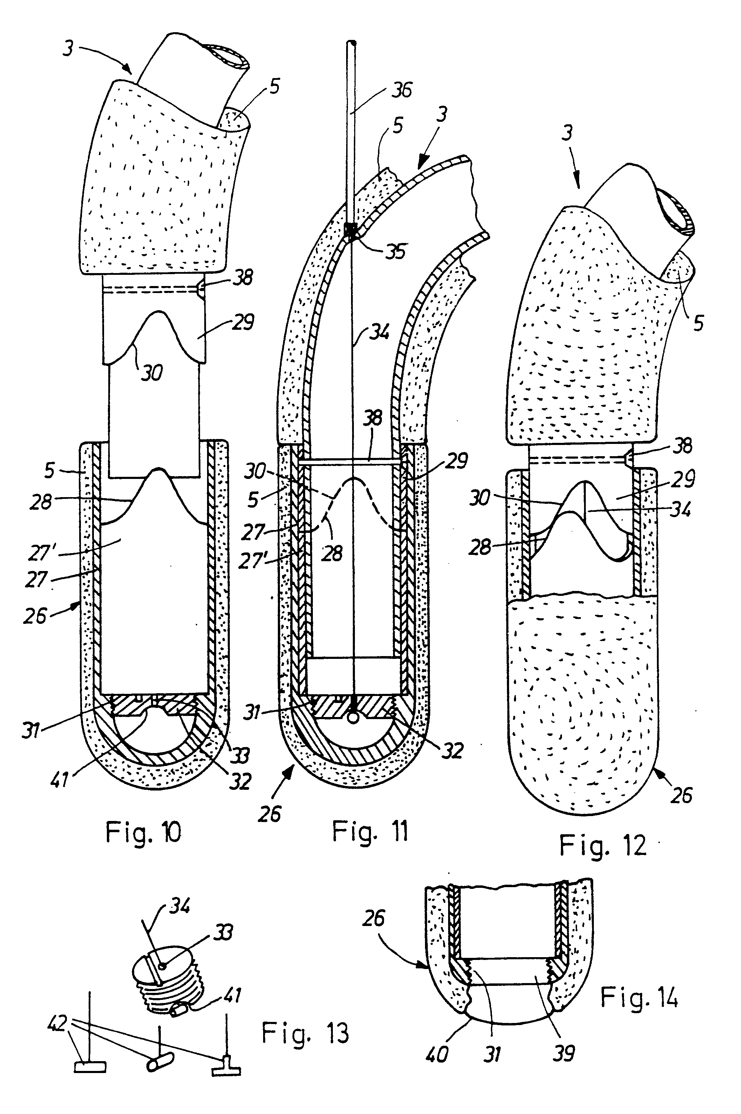

Die Fig. 10, 11 und 12 zeigen einen Endteil des Lenkers 3 in Form eines Drehgriffs 26. Auf dem Endteil der Lenkstange sitzt drehbar eine Rastmanschette 27', die an ihrem gemäß den Figuren oberen Ende eine Rastkurve 28 des gezeigten welligen Verlaufs bildet, d.h. daß der obere Öffnungsrand zwei diametral gegenüberliegende Nocken und zwei senkrecht dazu ebenfalls diametral gegenüberliegende Ausnehmungen bildet. Die Rastmanschette 27' liegt an einer Stützmanschette 29 an, die mittels einer Schraube 38 oder eines Patentsplints abnehmbar auf der Lenkstange montiert ist und deren der Rastmanschette 27' zugewandter Rand ebenfalls als Rastkurve 30 ausgebildet ist, deren Form der Rastkurve 28 entspricht. Die Rastmanschette 27' sitzt drehfest in einer Griffmanschette 27, mit der sie auch einstückig ausgebildet sein kann. Die Griffmanschette 27 ist an ihrem unteren Ende mit Innengewinde 31 versehen, in das eine Einsetzschraube 32 eingeschraubt ist. Die Einsetzschraube 32 ist mit einem Schlitz 37 zum Einschrauben ausgestattet und weist eine zentrale Bohrung 33 auf, durch die das Zugseil 34 des Bowdenzugs für die Bremse gefädelt ist. Das am Ende des Zugseils vorgesehene Blei-Endstück 42 ist damit an der Einsetzschraube 32 festgelegt. Da die Blei-Endstücke 42 der üblichen Bowdenzüge verschiedene Gestalt haben, ist die Einsetzschraube 32 auf ihrer Unterseite mit einer diametral verlaufenden halbzylindrischen Ausnehmung 41 versehen, die bei allen bekannten Blei-Endstücken, von denen einige in Fig. 13 gezeigt sind, eine günstige Abstützung gewährleistet. Wie die Fig. 10 bis 12 zeigen, ist die Griffmanschette 27 unten geschlossen und bildet zusammen mit der Einsetzschraube 32 einem Raum zur Unterbringung des Blei-Endstücks 42. In diesem Falle muß die Einsetzschraube 32 von oben eingeschraubt werden. Wie Figur 14 zeigt, ist es auch möglich, die Griffmanschette 27 unterhalb des Innengewindes 31 mit einer Öffnung 39 zu versehen, so daß die Einsetzschraube 32 von unten eingeschraubt werden kann. Die entsprechende Öffnung in der Kunststoffumschäumung 5 wird dann durch einen Deckel 40 verschlossen.

Durch Verdrehen des Drehgriffs 26 bzw. der Rastmanschette 27' aus der in Fig. 11 dargestellten Rastlage entfernt sich die Rastmanschette 27' zunehmend von der ortsfesten Stützmanschette 29, wie es in Fig. 12 gezeigt ist, wobei die Rastkurven 28 und 30 aufeinandergleiten. Dabei wird das Zugseil 34 in Richtung der Betätigung der Bremse angezogen. Die beiden Rastkurven 28 und 30 sind derart symmetrisch gestaltet, daß der Drehgriff 26 aus seiner Rastlage in beiden Richtungen verdreht werden kann, wenn gebremst werden soll. Indem die Maxima und Minima der Rastkurven ausreichend spitz ausgebildet werden, ist sichergestellt, daß ein Verdrehen des Drehgriffs aus der Rastlage erst nach Überwindung einer Drehmomentschwelle möglich ist. Der Verlauf der Rastkurven 28 und 30 zwischen den Extrema kann dann so gewählt werden, daß der Hub des Drehgriffs 26 je Drehwinkeleinheit mit zunehmender Verdrehung aus der Rastlage abnimmt.

Die Griffmanschette 27 überragt die Rastmanschette 27' so weit, daß sie einerseits in der Bremsstellung der Rastmanschette mindestens den Rastkurvenbereich der Stützmanschette abdeckt und andererseits in der Raststellung der Rastmanschette die Stützmanschette vollständig abdeckt. Die Kunststoffumschäumung 5 bedeckt die Griffmanschette 27 vollständig, so daß sich dann in der Rastlage des Drehgriffs eine geschlossene Umschäumung des gesamten Lenkers 3 ergibt.

Das Zugseil 34 verläuft im Innern des Lenkers 3 und tritt im Bereich der dem Griff benachbarten Krümmung des Lenkers 3 durch eine Bohrung 35 aus. Im Bereich der Bohrung 35 ist die Lenkstangenwand geringfügig eingekröpft, so daß sich auf der Außenseite der Bohrung 35 eine kleine Stützfläche für den Bowdenzugmantel 36 ergibt.

Die Manschetten 27, 27' und 29 bestehen vorzugsweise aus Messing, da Messing günstige Gleiteigenschaften aufweist.

**Patentansprüche**

1. Lenkeinrichtung für Fahrräder, deren sich quer zur Längsmittelebene des Fahrrades erstreckender, mit dem Lenkerschaft in Wirkverbindung stehender Lenker mit einer Kunststoffschicht überzogen ist, und mindestens einen Bremsgriff trägt, dadurch gekennzeichnet, daß der Lenker (3) in an sich bekannter Weise über ein Zwischenstück (2) mit dem Lenkerschaft (1) verbunden ist, der Lenker (3) und das Zwischenstück (2) mit einer eine verdichtete Oberfläche aufweisenden Kunststoffumschäumung (5) versehen sind, und der Bremsgriff als den Endteil (49) des umschäumten Lenkers (3) bildender Drehgriff (26) ausgebildet ist.

2. Einrichtung nach Anspruch 1, dadurch gekennzeichnet, daß die Kunststoffumschäumung (5) aus Integralschaum besteht.

3. Einrichtung nach Anspruch 1 oder 2, dadurch gekennzeichnet, daß der Lenker (3) in zwei um 180° verdrehten Stellungen mit dem Zwischenstück (2) verbindbar ist, wobei die Drehebene senkrecht zur Vorderradebene liegt und in Fahrtrichtung schräg nach unten, vorzugsweise um etwa 53°, abfällt.

4. Einrichtung nach Anspruch 3, dadurch gekennzeichnet, daß jeder der beidseits des Lenkerschaftes (1) liegenden Arme des Lenkers (3) aus einem etwa handbreiten geraden Innenabschnitt (45) und inem sich an diesen über einen Kleinen Krümmungsradius aufweisenden ersten Bogen (46) von knapp 90° anschliessenden in der Sportlenkerstellung des Lenkers schräg nach vorn und unten weisenden Zwischenabschnitt (47) besteht, der über einen ebenfalls einen kleinen Krümmungsradius aufweisenden zweiten Bogen (48) von knapp 90° mit dem ebenfalls etwa handbreiten in der Sportlenkerstellung des Lenkers schräg nach hinten und unten weisenden Endteil (49) des Lenkers in Verbindung steht.

5. Einrichtung nach einem der Ansprüche 1 bis 4, dadurch gekennzeichnet, daß der Querschnitt der Kunststoffumschäumung (5) des Lenkers (3) als Ellipse ausgebildet ist.

6. Einrichtung nach Anspruch 5, dadurch gekennzeichnet, daß die Kunststoffumschäumung (5) an den Endteilen (49) des Lenkers (3) auf ihrer dem Lenkerschaft (1) abgewandten Seite balliger ausgebildet ist als auf ihrer dem Lenkerschaft zugewandten Seite.

7. Einrichtung nach einem der vorangehenden Ansprüche, dadurch gekennzeichnet, daß Verbindungselemente wie Schraubenköpfe (4') und Muttern (23) in Ausnehmungen (6, 24) der Kunststoffumschäumung (5) eingelassen sind, die vorzugsweise durch Klemmdeckel verschließbar sind.

8. Einrichtung nach einem der Ansprüche 1 bis 7, dadurch gekennzeichnet, daß das Zwischenstück (2) eine eine Glocke (9) aufnehmende seitliche Ausnehmung (8) aufweist und die Betätigungseinrichtung (11) der Glocke in einer Ausnehmung (12) der Kunststoffumschäumung (5) an der Oberseite des Zwischenstücks liegt.

9. Einrichtung nach Anspruch 8, dadurch gekennzeichnet, daß das Zwischenstück (2) an seiner der Ausnehmung (8) für die Glocke (9) gegenüberliegenden Seite eine verschließbare Aufnahmeöffnung (13) aufweist.

10. Einrichtung nach einem der Ansprüche 1 bis 9, dadurch gekennzeichnet, daß das Zwischenstück (2) Ausnehmungen zur Aufnahme von Zusatzeinrichtungen, beispielsweise Lampe, Tachometer oder Kilometerzähler, aufweist.

11. Einrichtung nach einem der vorhergehenden Ansprüche, dadurch gekennzeichnet, daß das Zwischenstück (2) als Blechpreßteil oder als Spritzgußteil, beispielsweise Aluminiumspritzgußteil, ausgebildet ist.

12. Einrichtung nach einem der vorhergehenden Ansprüche, dadurch gekennzeichnet, daß das Zwischenstück (2) an seinem vorderen Ende eine als Montagefläche für den Lenker (3) dienende, nicht umschäumte Stirnfläche (20) aufweist, die mit Ausnehmungen und/oder Vorsprüngen (22) für einen formschlüssigen Eingriff mit entsprechenden Vorsprüngen und/oder Ausnehmungen (21) am Mittelteil des Lenkers versehen ist.

13. Einrichtung nach Anspruch 12, dadurch gekennzeichnet, daß die Ausnehmungen (21) und Vorsprünge (22 derart symmetrisch angeordnet oder ausgebildet sind, daß der Lenker (3) in zwei um 180° verdrehten Stellungen mit dem Zwischenstück (2) verbindbar ist, und ein an der Stirnfläche (20) austretender zentraler Befestigungsbolzen (19) im Zwischenstück (2) verankert ist, der den Mittelteil des Lenkers (3) oder einen auf diesem befestigten Bügel (15) durchdringt und an seinem freien Gewindeende eine Mutter (23) trägt.

14. Einrichtung nach einem der vorhergehenden Ansprüche, dadurch gekennzeichnet, daß das Zwischenstück (2) einen nach vorne offenen stumpfen Winkel mit dem Lenkerschaft (1) bildet, der etwa 110° beträgt.

15. Einrichtung nach einem der vorhergehenden Ansprüche, dadurch gekennzeichnet, daß der Lenker (3) aus gebogenem Stahlrohr oder aus Miteinander verschweißten Blechprofilteilen besteht.

16. Einrichtung nach einem der vorhergehenden Ansprüche, dadurch gekennzeichnet, daß der Drehgriff (26) eine auf dem Endstück des Lenkers (3) drehbare Rastmanschette (27') aufweist, die sich mit einer an ihrem dem Lenker abgewandten Ende ausgebildeten Rastkurve (28) auf einer Rastkurve (30) einer ortsfest aber auswechselbar auf dem Lenker montierten Stützmanschette (29) abstützt und mit dem Zugseil (34) des Bowdenzugs der Bremse in Verbindung steht.

17. Einrichtung nach Anspruch 16, dadurch gekennzeichnet, daß die Rastkurven (28, 30) derart symmetrisch verlaufen, daß eine Drehung der Rastmanschette (27') in beiden Richtungen den Abstand zwischen Rastmanschette und Stützmanschette (29) zur Bremsbetätigung vergrößert.

18. Einrichtung nach Anspruch 16 oder 17, dadurch gekennzeichnet, daß die Rastmanschette (27') drehfest in einer Griffmanschette (27) sitzt oder einstückig mit dieser ausgebildet ist, die in der Bremsstellung der Rastmanschette (27') mindestens den Rastkurvenbereich der Stützmanschette (29) abdeckt.

19. Einrichtung nach Anspruch 18, dadurch gekennzeichnet, daß die Griffmanschette (27) an ihrem äußeren Ende mit Innengewinde (31) zur Aufnahme einer Einsetzschraube (32) versehen ist, an der das Endstück des Zugseils (34) des Bowdenzugs verankert ist.

**Claims**

1. Steering means for bicycles whose handlebar extending transversely with respect to the longitudinal centre plane of the bicycle and being in active engagement with the stem of the handlebar is coated with a plastics layer and has at least one brake lever, characterized in that said handlebar (3) is connected in a manner known per se with the handlebar stem (1) by a transition piece (2), said handlebar (3) and said transition piece (2) are provided with a plastics foam coating (5) having a sealed surface, and said brake lever is designed as a rotatable grip (26) forming the end portion (49) of said foam-coated handlebar (3).

2. Means according to claim 1, characterized in that said plastics foam coating (5) consists of integral foam.

3. Means according to claim 1 or 2 characterized in that said handlebar (3) is connectable with said transition piece (2) in two positions rotatable by 180°, the plane of rotation being vertical to the front wheel plane and inclining obliquely downwards, preferably by about 53°.

4. Means according to claim 3, characterized in that each of the arms of said handlebar (3) disposed at both sides of said handlebar stem (1) consists of a straight inner section (45) of about one handbreadth and a transition section (47) connected thereto via a first bend (46) of almost 90° and having a small radius of curvature, said transition section (47) being inclined obliquely forwards and downwards in the sports position of the handlebar and being connected to the end portion (49) of said handlebar via a second bend (48) of almost 90° and likewise having a small radius of curvature, said end portion (49) being also of about one handbreadth and being inclined obliquely rearwards and downwards.

5. Means according to one of claims 1 to 4, characterized in that the cross-section of the plastics foam coating (5) of said handlebar (3) has the form of an ellipse.

6. Means according to claim 5, characterized in that said plastics foam coating (5) at said end portions (49) of said handlebar (3) is more bulky on the side averted from said handlebar stem than on the side facing said handlebar stem.

7. Means according to one of the preceding claims, characterized in that fasteners such as screw heads (4') and nuts (23) are set in recesses (6, 24) of said plastics foam coating (5) which are closable preferably by clamped caps.

8. Means according to one of claims 1 to 7, characterized in that said transition piece (2) comprises a lateral recess (8) accommodating a bell (9) and the actuation means (11) of said bell is disposed in a recess (12) of said plastics foam coating (5) on the upper surface of said transition piece.

9. Means according to claim 8, characterized in that said transition piece (2) has a closable receiving opening (13) on the side opposite to said recess (8) for said bell (9).

10. Means according to one of claims 1 to 9, characterized in that said transition piece (2) comprises recesses for accommodating accessories, for example, lamp, speedometer or cyclometer.

11. Means according to one of the preceding claims, characterized in that said transition piece (2) is a pressed sheet metal part or an injection moulded part, for example an injection moulded part of aluminum.

12. Means according to one of the preceding claims, characterized in that said transition piece (2) has at its forward end a front surface (20) which is not foam-coated, serves as the mounting surface of said handlebar (3) and is provided with recesses and/or projections (22) for a positive engagement with corresponding projections and/or recesses (21) in the middle portion of said handlebar.

13. Means according to claim 12, characterized in that said recesses (21) and projections (22) are disposed or designed so symmetrical that said handlebar (3) is connectable with said transition piece (2) in two positions rotatable by 180° and a central fastening bolt (19) projecting from front surface (20) is anchored in said transition piece (2), said fastening bolt extending through the middle portion of said handlebar (3) or a shackle (15) mounted thereon and having a nut (23) at its free threaded end.

14. Means according to one of the preceding claims, characterized in that said transition piece (2) forms an obtuse angle of about 110° with said handlebar stem, said angle opening to the front.

15. Means according to one of the preceding claims, characterized in that said handlebar (3) consists of a bent steel tube or of formed sheet metal parts welded together.

16. Means according to one of the preceding claims, characterized in that said rotatable grip (26) comprises an indexing sleeve (27') rotatable on the end piece of said handlebar (3), said indexing sleeve resting with its indexing curve (28) formed at the end averted from said handlebar upon an indexing curve (30) of a supporting sleeve (29) mounted stationarily but exchangeably on said handlebar and being in connection with cable (34) of the Bowden cable of the brake.

17. Means according to claim 16, characterized in that said indexing curves (28, 30) run so symmetrical that a rotation of said indexing sleeve (27') in both directions increases the distance between said indexing sleeve and said supporting sleeve (29) for actuating the brake.

18. Means according to claim 16 or 17, characterized in that said indexing sleeve (27') is disposed so as to be non-rotatable within a grip sleeve (27) or forms one piece therewith, said grip sleeve covering in the brake position of said indexing sleeve (27') at least the indexing curve range of said supporting sleeve (29).

19. Means according to claim 18, characterized in that said grip sleeve (27) is provided at its outer end with an internal thread (31) for receiving a set screw (32), at which the end portion of said cable (34) of the Bowden cable is anchored.

## Revendications

1. Dispositif de direction pour bicyclettes dont le guidon dirigé perpendiculairement au plan de symétrie longitudinale de la bicyclette, en liaison active avec l'arbre de direction, est recouvert d'une couche plastique et comporte au moins une poignée de frein, caractérisé en ce que le guidon (3) est relié de façon connue en soi au moyen d'une pièce intermédiaire (2) à l'arbre de direction (1), en ce que le guidon (3) et la pièce intermédiaire (2) comportent un gainage de mousse plastique présentant une surface épaissie, et en ce que la poignée de frein est conformée en poignée rotative constituant la partie terminale au bout (49) du guidon (3) gainé de mousse.

2. Dispositif selon la revendication 1, caractérisé en ce que le gainage plastique (5) est en mousse à peau intégrée.

3. Dispositif selon la revendication 1 ou 2, caractérisé en ce que le guidon (3) peut être relié à la pièce intermédiaire (2) en deux positions décalées en rotation de 180°, le plan de rotation étant perpendiculaire au plan de la roue avant et descendant obliquement, de préférence d'environ 53°, dans le sense de la marche.

4. Dispositif selon la revendication 3, caractérisé en ce que chacune des branches du guidon (3) se trouvant des deux côtés de l'arbre de direction (1) comprend une section intérieure rectiligne (45) à peu près de la largeur de la main et une section intermédiaire (47) dirigée obliquement vers l'avant et le bas dans la position sport du guidon se raccordant à la première par un premier arc (46) présentant un faible rayon de courbure, qui est en liaison par un second arc (48) d'à peine 90° présentant également un faible rayon de courbure avec la partie terminale (49) du guidon ayant également à peu près la largeur de la main dirigée obliquement vers l'arrière et le bas dans la position sport du guidon.

5. Dispositif selon l'une quelconque des revendications 1 à 4, caractérisé en ce que la section de la gaine plastique du guidon (3) a la forme d'une ellipse.

6. Dispositif selon la revendication 5, caractérisé en ce que la gaine de mousse plastique (5) située sur sur les parties terminales (49) du guidon (3) a une forme plus bombée de son côté opposé à l'arbre de direction (1) que de son côté situé vers l'arbre de direction.

7. Dispositif selon l'une quelconque des revendications précédentes, caractérisé en ce que des éléments de liaison comme des têtes de vis (4') et des écrous (23) sont insérés dans des évidements (6, 24) de la gaine de mousse plastique (5), qui peuvent être fermés, de préférence par des caches.

8. Dispositif selon l'une quelconque des revendications 1 à 7, caractérisé en ce que la pièce intermédiaire (2) comporte un évidement latéral (8) recevant une cloche (9) et en ce que le mécanisme d'actionnement (11) de la cloche se trouve dans un évidement (12) de la gaine de mousse plastique (5) en haut de la pièce intermédiaire.

9. Dispositif selon la revendication 8, caractérisé en ce que la pièce intermédiaire (2) comporte une ouverture de réception obturable (13) do son côté opposé à l'évidement (8) destiné à la cloche (9).

10. Dispositif selon l'une quelconque des revendications 1 à 9, caractérisé en ce que la pièce intermédiaire (2) comporte des évidements de réception de mécanismes additionnels, par exemple une lampe, un tachymètre ou un compteur kilométrique.

11. Dispositif selon l'une quelconque des revendications 1 à 10, caractérisé en ce que la pièce intermédiaire (2) est conformée en pièce de tôle emboutie ou en pièce moulée par injection, par exemple une pièce d'aluminium moulée par injection.

12. Dispositif selon l'une quelconque des revendications précédentes, caractérisé en ce que la pièce intermédiaire (2) comporte à son extrémité antérieure une surface frontale (20) non gainée de mousse servant de surface de montage du guidon (3) qui comporte des évidements et/ou des saillies (22) pour un accouplement par concordance de forme avec des saillies et/ou des évidements correspondants (21) situés sur la partie centrale du guidon.

13. Dispositif selon la revendication 12, caractérisé en ce que les évidements (21) et les saillies (22) sont disposés ou conformés symétriquement de telle façon que le guidon (3) peut être relié en deux positions décalées en rotation de 180° avec la pièce intermédiaire (2), et en ce qu'un boulon de fixation central sortant sur la surface frontale (20) est ancré dans la pièce intermédiaire (2), boulon qui traverse la partie centrale du guidon (3) ou un étrier (15) fixé sur lui et porte un écrou (23) à son extrémité filetée libre.

14. Dispositif selon l'une quelconque des revendications précédentes, caractérisé en ce que la pièce intermédiaire (2) fait un angle obtus ouvert vers l'avant d'environ 110°C, avec l'arbre de direction (1).

15. Dispositif selon l'une quelconque des revendications précédentes, caractérisé en ce que le guidon (3) est en tube d'acier cintré ou constitué par des pièces de tôle profilées pouvant être soudées entre elles.

16. Dispositif selon l'une quelconque des revendications précédentes, caractérisé en ce que la poignée rotative (26) comporte un manchon de crantage (27') pouvant tourner sur l'embout du guidon (3) qui s'appuie par une courbe de crantage (28) formée sur son extrémité opposée au guidon sur une courbe ce crantage (30) d'un manchon d'appui (29) monté fixement mais de façon amovible sur le guidon et est en liaison avec le câble de traction (34) de la commande Bowden du frein.

17. Dispositif selon la revendication 16, caractérisé en ce que les courbes de crantage (28, 30) ont une allure symétrique telle qu'une rotation du manchon de crantage (27') dans le deux sens augmente la distance entre le manchon de crantage et le manchon d'appui (29) pour actionner le frein.

18. Dispositif selon la revendication 16 ou 17 caractérisé en ce que le manchon de crantage (27') est placé de façon à être solidaire en rotation dans un manchon de prise (27) ou est formé d'un seul tenant avec lui, manchon de prise qui, dans la position de freinage du manchon de crantage (27'), recouvre au moins la zone de courbe de crantage du manchon d'appui (29).

19. Dispositif selon la revendication 18, caractérisé en ce que le manchon de prise (27) comporte à son extrémité extérieure un taraudage (31) pour recevoir une vis de déclenchement (32) à laquelle est ancré l'embout du câble de traction (34) de la commande Bowden.

**0 001 646**

Fig. 1

Fig. 4

Fig. 2

Fig. 5

Fig. 3

Fig. 6

Fig. 7

Fig. 8

Fig. 9

Fig. 10

Fig. 11

Fig. 12

Fig. 13

Fig. 14